# EUROPEAN PATENT APPLICATION

(11) **EP 2 166 450 A1**
(43) Date of publication of application: **24.03.2010**
(21) Application number: 08105407.4
(22) Date of filing: 23.09.2008
(51) Int. Cl.: G06F 9/48

(54) **A method to dynamically change the frequency of execution of functions within tasks in an ECU**

(71) Applicant: ROBERT BOSCH GMBH, 70442 Stuttgart (DE)
(72) Inventor: Hilliges, Martin, 75392, Deckenpfronn (DE); Wendt, Hauke, 70839, Gerlingen (DE)

(57) **Abstract**

The invention relates in general to the field of task scheduling and in specific to dynamic scheduling of functions within a rate monotonic task in an ECU. The ECU contains tasks ( 10, 12 ). These tasks are software programs which are responsible for functioning of the ECU. The tasks in turn contain functions ( 16 to 25 ). When CPU load is within a set threshold, all the functions ( 16 to 25 ) within the task ( 10 ) run in a pre-determined sequence. But when the CPU load increases because of some critical events occurring at a faster rate and the load crosses a set threshold, the CPU may not be able to run all the tasks and all the functions. The invention proposes a method to dynamically change the frequency of execution of some functions within tasks which are not so critical, thus saving CPU time which can be allocated to other critical tasks or functions.

## Description

### State of the Art

The invention relates in general to the field of task scheduling and in specific to dynamic scheduling of functions within a task in an Electronic Control Unit (ECU).

From US 2006/0294522, a method to dynamically schedule the tasks by mapping the time sensitive tasks to system profile tasks and dynamically adjusting the priorities of the tasks according to system profile tasks, is disclosed. The US 20080028415 discloses a method to dynamically execute the tasks by determining the available slack time from the tasks and allocating the slack time to the other tasks.

### Advantages of the invention

The device according to the independent patent claim has the below mentioned advantages:

By dynamically reducing the frequency of execution of the functions which are not so critical, in a software task, when the CPU load is above a set threshold, more CPU time is provided to other critical tasks, thus improving the real time performance of the critical tasks under high CPU load.

Further improvements and/or advantages are realised by the features of the dependent patent claims.

The functions inform the monitoring means their minimum frequency of execution through an array in the memory. This is a simple array and does not involve any additional change in the design of the task structure. Same case with the dynamic frequency of execution which the functions store in another array in the memory.

The CPU load is computed by a profiler which is normally available for the operating systems. This does not need any new or specific profiler.

Dynamic scheduling of functions within the tasks is easier as the monitoring means has full control over the scheduling, independent of operating system.

### Brief descriptions of the drawings

- Figure 1: shows organisation of the tasks and the functions
- Figure 2: shows flow chart of monitoring means
- Figure 3A to 3Cs: how different examples of dynamic scheduling of functions

### Description of the embodiments

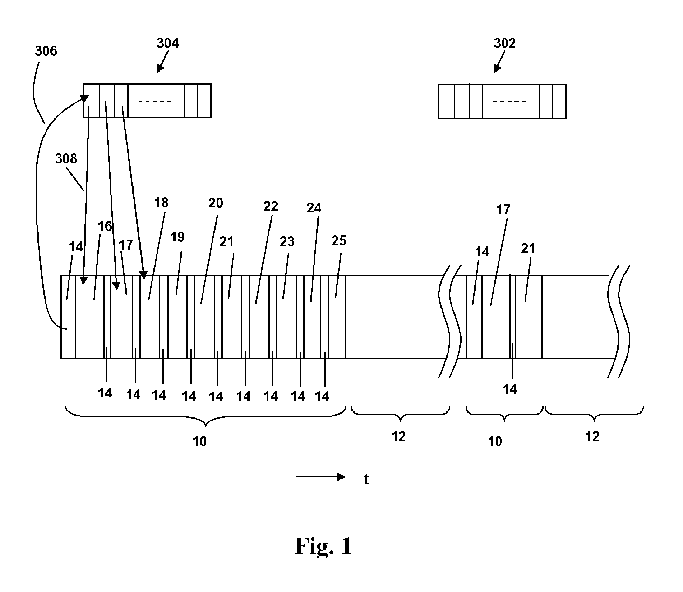

Fig. 1 shows the processing time 't' of a CPU and the execution of functions ( 16 to 25 ) by the CPU. Further the Fig. 1 shows memory 304 and 302. The functions ( 16 to 25 ) are organised for example, in the task ( 10 ). These tasks ( 10, 12 ) are software programs residing in the memory in the ECU and are responsible for controlling the ECU. Each of these tasks may have a plurality of functions running within the tasks. The difference between the tasks and the functions in the present context is, the tasks are scheduled by the operating system and the functions are scheduled by the monitoring means 14. Task scheduling involves running of different tasks in a rate monotonic order or based on events or a combination of both. This is called multitasking. The multitasking provides a CPU the ability to seemingly work on multiple tasks at the same time. This is achieved by quickly switching from one task to another task, making it look like the CPU is executing all the tasks at the same time.

Rate-Monotonic Scheduling is a well-known static scheduling technique in which the tasks or the functions run at a predetermined periods, in periodic loops, for example some task or function may run in 5 milliseconds loop, i.e. the task or the function runs once in every 5 milli seconds, some task or function may run in 10 milliseconds loop, i.e. task or the function runs once in every 10 milli seconds. Rate-monotonic scheduling ensures tasks or the functions meet more or less the deadlines set for them. All tasks or the functions have a deadline equal to their period. The tasks or the functions scheduled in a rate monotonic order are referred as rate monotonic tasks or rate monotonic functions respectively. The invention is applicable to the rate monotonic functions, because their periods are known in advance. The functions which run on events, can not be predicted in advance and no dynamic scheduling is possible for them.

The monitoring means 14 is responsible to dynamically schedule the functions 16 to 25 based on the CPU load. The monitoring means 14 is executed by the CPU within the task 10. Once the monitoring means 14 starts running, it in turn schedules each of the functions 16 to 25 based on the frequency of execution of the functions 16 to 25. Before each function is scheduled, a part of monitoring means 14 runs to check whether the function needs to run at that point of time. This is shown in the figure as small multiple blocks of 14 at the beginning of each function.

A profiler which is not shown in the figure, which is a standard software program for measuring the CPU load, continuously computes the CPU load.

The Fig. 1 represents overall organisation of the tasks and the functions. There is a normal frequency of execution defined for each of the functions 16 to 25 referred as Tₙₒᵣ. This Tₙₒᵣ is predefined based on the criticality of the function and used for executing the function in a rate monotonic order, under normal CPU load. Also each function stores in the memory 302 their minimum frequency of execution. This minimum frequency of execution is referred as Tₘᵢₙ. Tₘᵢₙ is the minimum frequency within which a function needs to run, for proper functioning of the system. The functions can change Tₘᵢₙ dynamically at any time depending upon their internal states, for example if a function changes state from normal state to sleep state or inactive state, the function can run at slower rate and the function reduces Tₘᵢₙ accordingly.

When the CPU load is below a set threshold, all the functions ( 16 to 25 ) are executed sequentially in a rate monotonic order, using Tₙₒᵣ of each function as frequency of executing the function.

When the CPU load increases, the danger of a system overload increases. This may result in decrease in the performance of the ECU or even result in a malfunction. To avoid such a condition CPU has to check which tasks or which functions can be run at a slower rate so that the gained CPU time can be allotted to critical tasks or critical functions.

The invention proposes a method to dynamically change the frequency of execution of the functions which will save CPU time.

Based upon the dynamic load of the CPU, the monitoring means 14 will decide which functions need to be executed at reduced frequencies. This is referred as T_{dyn}. This T_{dyn} is decided by the monitoring means 14 during the run time, based on the CPU load, the minimum frequency of execution of a function Tₘᵢₙ. The monitoring means stores the T_{dyn} for each function in the memory 304.

The monitoring means 14 will inform the dynamic frequency of execution T_{dyn} of each function to respective functions, so that the functions will know at what time intervals they get executed. The functions may use this timing information for their internal computations, for example to calculate the new value of an integrator based on the current value of T_{dyn}

The storing of T_{dyn} by the monitoring means 14 is represented as 306. The functions accessing the T_{dyn} for their internal use is represented as 308.

This dynamic frequency of execution of a function T_{dyn} is a value which lies between the normal frequency of execution Tₙₒᵣ and minimum frequency of execution Tₘᵢₙ.

Here care should be taken in selecting the functions which can have a slower frequency of execution. Only those functions which will not affect the overall functioning of the system, if run at slower frequency of execution, should be selected for this purpose.

For example some functions may be reading the data from different sensors at a much higher frequency to compute a high accuracy sensor reading. When these functions run at a slower rate temporarily, the accuracy in the computation of the sensor reading may come down, but over all functioning of the system will still continue.

The explanation below uses example timings to make it understand better.

Under normal conditions i.e. when the CPU load is below a set threshold, all the functions 16 to 25 are run one after another in the same sequence as shown in Fig. 1. The task 10 itself runs at a fixed interval of time, for example once in every 10 milliseconds, so the functions 16 to 25 also run at the same interval. The execution of the functions 16 to 25 under the task 10 takes a part of the CPU time, for example 2 milliseconds. As the functions repeat every 10 milliseconds and the duration of execution of all the functions within the task 10 is 2 milliseconds, the CPU spends remaining 8 milliseconds out of every 10 milliseconds, for the other tasks which are not shown in the figure.

When the tasks demand more and more CPU time because of other important events occurring at a faster rate, for example when the engine speed increases drastically, the CPU load increases and at some point of time the CPU load will exceed the set threshold.

The increase in CPU load above the threshold has to be resolved now by dynamically slowing down the frequency of execution of some of the functions. The frequency of execution of the functions which run in a rate monotonic order is reduced to gain CPU time. A case where the CPU load exceeds the set threshold is explained below.

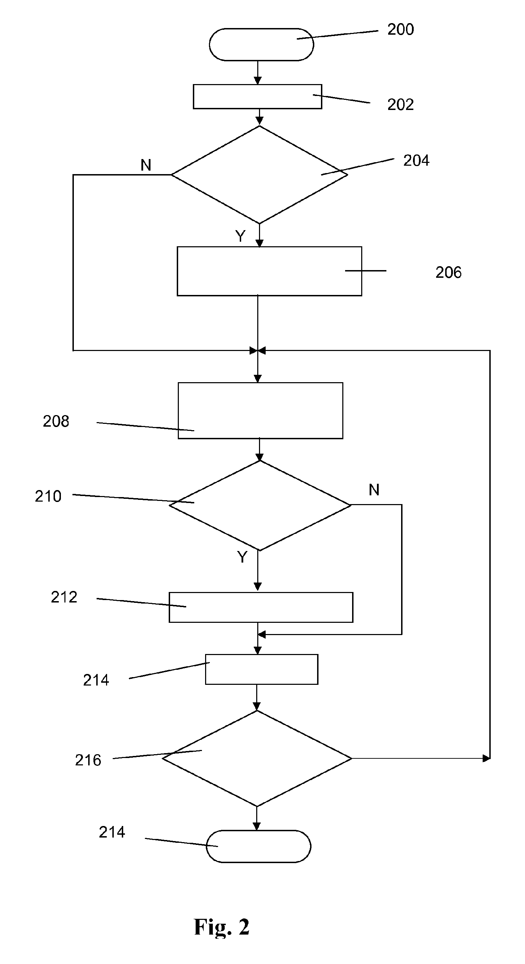

Shown in Fig. 2 is the flow chart of the execution of monitoring means 14.
The sequence of steps from Start ( 200 ) to Return ( 220) is defined as one cycle.

The monitoring means 14 first checks the CPU load. If the CPU load is below the set threshold, then monitoring means 14 schedules all the functions one by one in a rate monotonic order using Tₙₒᵣ as the frequency of execution

If the CPU load is above a set threshold, the monitoring means 14 computes the dynamic frequency of scheduling T_{dyn} for each of the functions 16 to 25 and stores the values in the memory 304. The T_{dyn} is computed based on current CPU load and Tₘᵢₙ.

Monitoring means 14 reads the dynamic frequency of execution T_{dyn} for the first function and checks whether the function needs to run in the current cycle. If the function needs to run in the current cycle, it schedules the function. And it continues similarly for the other functions.

Once all the functions are run, the monitoring means 14 returns control to other tasks.

The monitoring means 14 keeps performing above steps whenever called by the task 10.

The steps shown in flowchart are listed below:
200 - Start
202 - Initialise function counter I to 0, to keep track which function is to be executed
204 - Check whether CPU load above threshold, if above threshold go to 206 else go to 208
206 - Compute T_{dyn} for all the functions and store
208 - Get T_{dyn} if CPU load is above threshold or Tₘᵢₙ if CPU load is below threshold
210 - Check whether function[I] should run in this cycle. If function[I] needs to run go to 212 else go to 214

212 - Execute function[I]
214 - Increment function counter I
216 - Check whether all the functions are executed, if not all functions are executed, go to 208
218 - Return

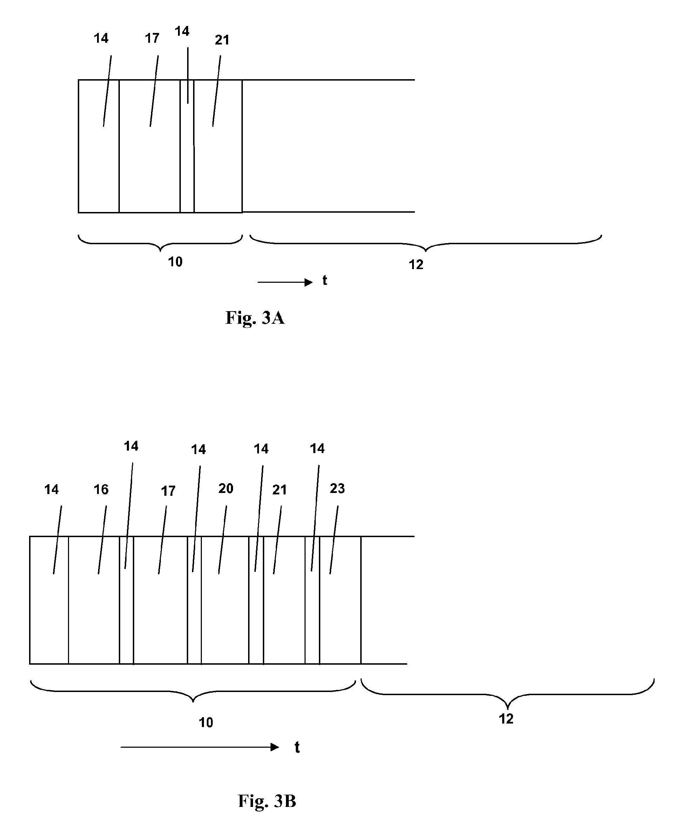

Shown in Fig. 3A to 3C are the different cases representing how the functions run at slower frequencies of execution when the CPU load is above the set threshold and the saving in CPU time.

Fig. 3A shows the first cycle when the Task 10 runs after the CPU load has exceeded the set threshold. It is shown as an example that the monitoring means 14 runs only the functions 17 and 21 which need to run with normal frequency. After executing functions 17 and 21, the Task 10 releases the CPU, i.e. operating system switches to other task. It can be seen that because only functions 17 and 21 are run in this cycle, there is saving in CPU time which can be allotted to other critical tasks.

Fig. 3B shows the second cycle when the task 10 runs. In this cycle, for example the functions 16, 17, 20, 21 and 23 are run. Functions 17 and 21 run with normal frequency and functions 16, 20 and 23 run at half the normal frequency i.e. run once in two cycles.

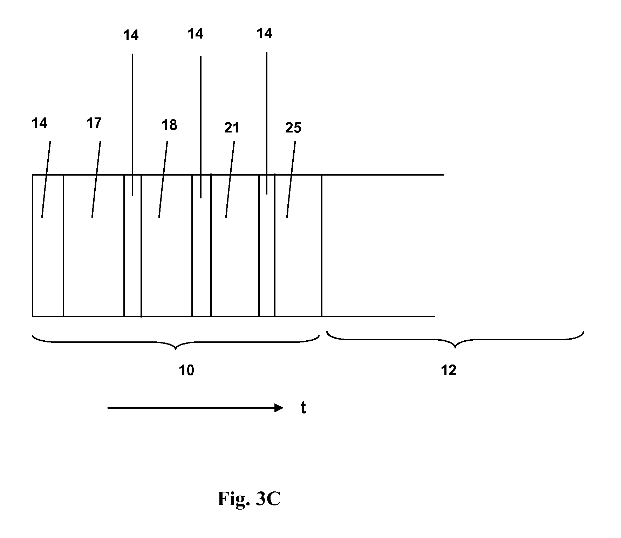

Fig. 3C shows the third cycle where functions 17, 18, 21 and 25 are run. Here the functions 17 and 21 run with normal frequency and the functions 18 and 25 are run at one third of the frequency, i.e. run once in three cycles.

This selective running of the function will continue till the CPU load comes below the set threshold.

In the above embodiment, the functions were run by the monitoring means 14 by checking each time the T_{dyn} of each function. In an alternate embodiment, the monitoring means can read the T_{dyn} of the functions which need to run in the current cycle and store the addresses of these functions in a table. The functions can be executed directly using these addresses in the table.

The invention proposes the method to dynamically schedule the functions within the tasks. However the same method can be extended to dynamically schedule the tasks also based on the CPU load.

## Claims

1. An electronic control unit ( ECU ) comprising of a central processing unit ( CPU ), a set of rate monotonic software tasks ( 10, 12 ... ) and a set of functions ( 16 to 25 ) within the task (10 ), the said functions ( 16 to 25 ) being executed at a predetermined frequencies, the said ECU **characterised by** a monitoring means ( 14 ) capable of dynamically changing the frequency of execution of the functions( 16 to 25 ), based on the CPU load.

2. An ECU according to claim 1 where in the software tasks ( 10, 12 ... ) are scheduled by the operating system.

3. An ECU according to claim 1 where in the software tasks ( 10, 12 ... ) run the monitoring means ( 14 ) and the monitoring means ( 14 ) schedules the functions ( 16 to 25 ).

4. An ECU according to claim 1, where in a profiler computes the CPU load and provides the information to monitoring means ( 14 ) whenever required.

5. An ECU according to claim 1 where in a memory 304 contains the dynamic frequency of execution of functions.

6. A method to dynamically decrease the frequency of execution of the functions, in an ECU, based on the CPU load, the said method comprising the steps:
- determining the CPU load
- determining the functions which need to run at the reduced frequency of execution and also the reduced frequency of execution of the functions
- executing the functions based on their frequency of execution

## Amended claims

### Amended claims in accordance with Rule 137(2) EPC.

**1.** An electronic control unit (ECU) comprising a central processing unit (CPU), a set of rate monotonic software tasks (10, 12 ...) and a set of functions (16 to 25) within the task (10), the said functions (16 to 25) being executed at a predetermined frequencies, the said ECU **characterised in that**
- the said functions (16 to 25) have a normal frequency of execution Tₙₒᵣ and a minimum frequency of execution Tₘᵢₙ stored
- a monitoring means (14) adapted to compute a dynamic frequency of execution T_{dyn} of the functions (16 to 25) in dependence of the Tₘᵢₙ and the CPU load when the CPU load exceeds a set threshold, the said monitoring means further adapted to excute the functions using the dynamic frequency of execution T_{dyn}
- the said monitoring means further adapted to inform the functions about their dynamic frequency of execution T_{dyn}.

**6.** A method to dynamically schedule the execution of the functions (16 to 25) in an ECU, based on the CPU load, the said method comprising the steps:
- Predefining a normal frequency of execution Tₙₒᵣ for the functions (16 to 25)
- Functions (16 to 25) storing their minimum frequency of execution Tₘᵢₙ
- Determining if the CPU load has crossed a set threshold
- If the CPU load has crossed a set threshold, then computing a dynamic frequency of execution T_{dyn} for the functions (16 to 25) in dependence of Tₘᵢₙ and the CPU load
- Informing the functions about their dynamic frequency of execution T_{dyn}
- executing the functions with the dynamic frequency of execution T_{dyn}
